# EUROPEAN PATENT APPLICATION

(11) **EP 4 383 818 A1**
(43) Date of publication of application: **12.06.2024**
(21) Application number: 22862878.0
(22) Date of filing: 05.07.2022
(51) Int. Cl.: H04W 36/00, H04W 36/08, H04W 36/38

(54) **COMMUNICATION METHOD AND APPARATUS**

(30) Priority: 30.08.2021 CN 202111007590
(71) Applicant: Huawei Technologies Co., Ltd., Shenzhen, Guangdong 518129 (CN)
(72) Inventor: XU, Bin, Shenzhen, Guangdong 518129 (CN); TANG, Meiling, Shenzhen, Guangdong 518129 (CN); LI, Zhengfeng, Shenzhen, Guangdong 518129 (CN)
(74) Representative: Körber, Martin Hans
(86) International application number: PCT/CN2022/103816
(87) International publication number: WO 2023/029737

(57) **Abstract**

Embodiments of this application provide a communication method and apparatus. The method includes: A source secondary node SN receives an address of a core network device from a source master node MN. The source SN establishes, based on the address of the core network device, a channel for data forwarding between the source SN and the core network device, where the channel for data forwarding is used for transmission of data of a terminal device. According to embodiments of this application, in a handover forwarding scenario, a quantity of times that the data of the terminal device is transmitted can be reduced, a delay and overheads can be reduced, and user experience can be improved.

## Description

This application claims priority to Chinese Patent Application No. 202111007590.7, filed with the China National Intellectual Property Administration on August 30, 2021 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

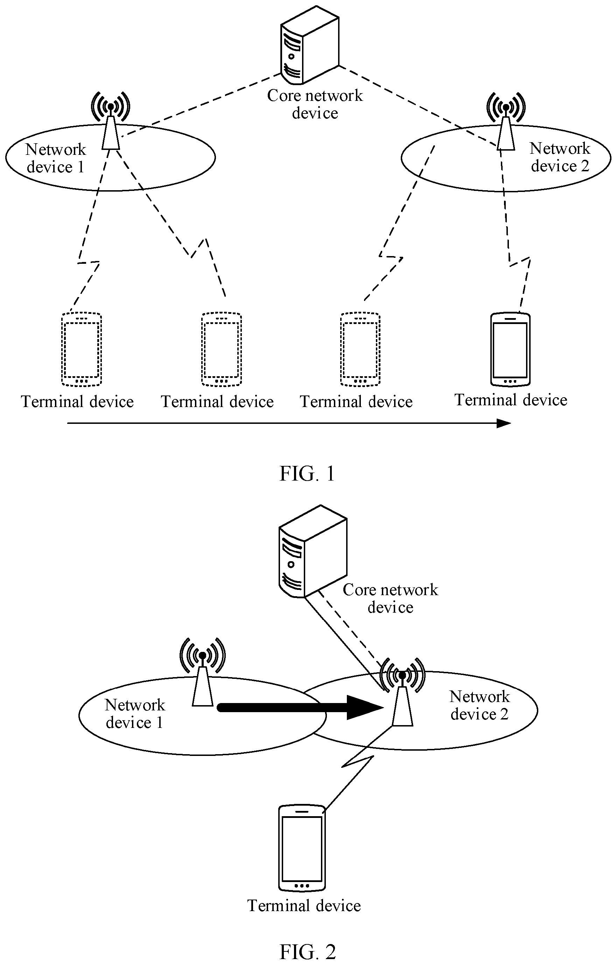

Due to mobility of a terminal device, the terminal device may establish wireless connections to different network devices. The network device needs to ensure service continuity when the terminal device moves between the different network devices. As shown in FIG. 1, the terminal device may maintain a wireless connection to a network device 1 before handover, and maintain a wireless connection to a network device 2 after the handover. In a process in which the terminal device moves from a coverage area of the network device 1 to a coverage area of the network device 2, or the terminal device is handed over from the network device 1 to the network device 2, the terminal device may still send a part of uplink data to the network device 1, or a core network device may still send a part of downlink data of the terminal device to the network device 1. To ensure that the data is not lost in the handover process, the network device 1 needs to send uplink data and downlink data that are of the terminal device and that are received in the handover process to the network device 2, so that the network device 2 is responsible for continuing to process the uplink data and the downlink data of the terminal device. In this way, service continuity of the terminal device in the handover process is ensured, and user experience is improved. As shown in FIG. 2, the terminal device may maintain the wireless connection to the network device 1 before the handover, and maintain the wireless connection to the network device 2 after the handover. When the terminal device moves from the coverage area of the network device 1 to the coverage area of the network device 2 and there is a channel directly communicated between the network device 1 and the network device 2, the network device 1 may send a part of the uplink data and the downlink data that are of the terminal device and that are received in the handover process to the network device 2 through an interface between the network device 1 and the network device 2.

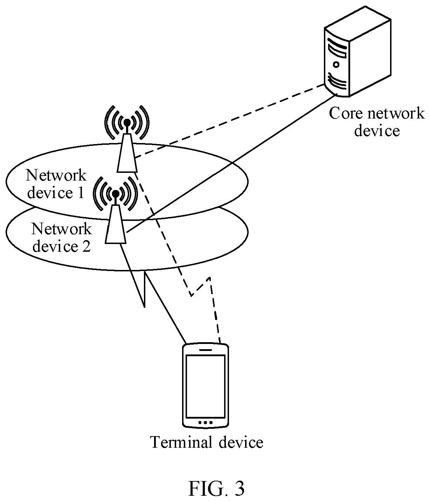

Currently, a dual connectivity function is introduced to meet an increasingly high requirement for a service rate of the terminal device. Two network devices are supported in simultaneously providing wireless links for one terminal device, so that data transmission can be simultaneously performed for the terminal device on the two wireless links. As shown in FIG. 3, the network device 1 may maintain a control signaling connection to the core network device, and the network device 1 may be referred to as a master node (master node, MN). The network device 2 may maintain a user data connection to the core network device, and the network device 2 may be referred to as a secondary node (secondary node, SN).

However, when the terminal device is in a dual connectivity state before the handover, how to ensure transmission continuity of the uplink data and the downlink data of the terminal device in a source secondary node in the handover process is a technical problem that needs to be urgently resolved.

### SUMMARY

Embodiments of this application disclose a communication method and apparatus, to reduce a delay and overheads and improve user experience in a handover forwarding scenario.

A first aspect of embodiments of this application discloses a communication method. The method includes:
A source secondary node SN receives an address of a core network device from a source master node MN.

The source SN establishes, based on the address of the core network device, a channel for data forwarding between the source SN and the core network device, where the channel for data forwarding is used for transmission of data of a terminal device.

In a possible implementation, the data of the terminal device includes data sent by the terminal device to the core network device, or data sent by the core network device to the terminal device.

In another possible implementation, the address of the core network device is carried in a secondary base station release request message or a secondary base station release confirm message.

According to the method provided in the first aspect, the source SN establishes, based on the address of the core network device, the channel for data forwarding between the source SN and the core network device, and transmits the data of the terminal device from the source SN to the core network device through the channel. Therefore, a quantity of times that the data of the terminal device is transmitted can be reduced, a delay and overheads can be reduced, and user experience can be improved.

A second aspect of embodiments of this application discloses a communication method. The method includes:
A target master node MN receives an address of a target secondary node SN from the target SN.

The target MN sends the address of the target SN to a core network device.

In a possible implementation, the address of the target SN is carried in a secondary base station addition response message.

In another possible implementation, the address of the target SN is carried in a handover response message.

In another possible implementation, the address of the target SN includes a general packet radio service tunneling protocol GTP tunnel endpoint identifier.

According to the method provided in the second aspect, the target MN receives the address of the target SN, and sends the address of the target SN to the core network device, so that the core network device establishes, based on the address of the target SN, a channel for data forwarding between the core network device and the target SN, and transmits data of a terminal device from the core network device to the target SN through the channel. Therefore, a quantity of times of transmission of the data of the terminal device is reduced, a delay and overheads are reduced, and user experience is improved.

A third aspect of embodiments of this application discloses a communication method. The method includes:
A source master node MN receives an address of a core network device from the core network device.

The source MN sends the address of the core network device to a source secondary node SN.

In a possible implementation, the address of the core network device is carried in a handover command.

In another possible implementation, the address of the core network device is carried in a secondary base station release request message or a secondary base station release confirm message.

According to the method provided in the third aspect, the source MN receives the address of the core network device, and sends the address of the core network device to the source SN, so that the source SN establishes, based on the address of the core network device, a channel for data forwarding between the source SN and the core network device, and transmits data of a terminal device from the source SN to the core network device through the channel. Therefore, a quantity of times of transmission of the data of the terminal device can be reduced, a delay and overheads can be reduced, and user experience can be improved.

A fourth aspect of embodiments of this application discloses a communication method. The method includes:
A source secondary node SN receives an address of a target SN from a source master node MN or a core network device.

The source SN establishes, based on the address of the target SN, a channel for data forwarding between the source SN and the target SN.

In a possible implementation, the address of the target SN includes a general packet radio service tunneling protocol GTP tunnel endpoint identifier.

According to the method provided in the fourth aspect, the source SN establishes, based on the address of the target SN, the channel for data forwarding between the source SN and the target SN, and transmits forwarding data from the source SN to the target SN through the channel. Therefore, a quantity of times of transmission of the forwarding data can be reduced, a delay and overheads can be reduced, and user experience can be improved.

A fifth aspect of embodiments of this application discloses a communication method. The method includes:
A source secondary node SN receives an address of a target master node MN from a source MN or a core network device.

The source SN establishes, based on the address of the target MN, a channel for data forwarding between the source SN and the target MN.

According to the method provided in the fifth aspect, the source SN establishes, based on the address of the target MN, the channel for data forwarding between the source SN and the target MN, and transmits forwarding data from the source SN to the target MN through the channel. Therefore, a quantity of times of transmission of the forwarding data can be reduced, a delay and overheads can be reduced, and user experience can be improved.

A sixth aspect of embodiments of this application provides a communication method. The method includes:
A source master node MN receives an address of a target SN from a target MN.

The source MN sends the address of the target secondary node SN to a source SN.

In a possible implementation, the address of the target SN is carried in a handover response message.

In another possible implementation, the address of the target SN is carried in a secondary base station release request message or a secondary base station release confirm message.

According to the method provided in the sixth aspect, the source MN sends the address of the target SN to the source SN, so that the source SN establishes, based on the address of the target SN, a channel for data forwarding between the source SN and the target SN, and transmits forwarding data from the source SN to the target SN through the channel. Therefore, a quantity of times of transmission of the forwarding data can be reduced, a delay and overheads can be reduced, and user experience can be improved.

A seventh aspect of embodiments of this application discloses a communication method. The method includes:
A target master node MN receives an address of a target secondary node SN from the target SN.

The target MN sends the address of the target SN to a source MN.

In a possible implementation, that the target MN sends the address of the target SN to a source MN includes: The target MN determines, based on a current load status and a capability, to send the address of the target SN to the source MN.

In another possible implementation, the address of the target SN includes a general packet radio service tunneling protocol GTP tunnel endpoint identifier.

An eighth aspect of embodiments of this application discloses a communication apparatus. The apparatus includes at least one processor and a communication interface, and the at least one processor invokes a computer program or instructions stored in a memory to perform any implementation of the first aspect to the seventh aspect.

A ninth aspect of embodiments of this application discloses a communication apparatus, including a communication unit and a processing unit.

The communication unit is configured to receive an address of a core network device from a source master node MN.

The processing unit is configured to establish, based on the address of the core network device, a channel for data forwarding between the apparatus and the core network device, where the channel for data forwarding is used for transmission of data of a terminal device.

In a possible implementation, the data of the terminal device includes data sent by the terminal device to the core network device, or data sent by the core network device to the terminal device.

In another possible implementation, the address of the core network device is carried in a secondary base station release request message or a secondary base station release confirm message.

For technical effects brought by the ninth aspect or the possible implementation, refer to descriptions of the technical effects of the first aspect or a corresponding implementation.

A tenth aspect of embodiments of this application discloses a communication apparatus, including a communication unit and a processing unit.

The communication unit is configured to receive an address of a target secondary node SN from the target SN.

The communication unit is configured to send the address of the target SN to a core network device.

In a possible implementation, the address of the target SN is carried in a secondary base station addition response message.

In another possible implementation, the address of the target SN is carried in a handover response message.

In another possible implementation, the address of the target SN includes a general packet radio service tunneling protocol GTP tunnel endpoint identifier.

For technical effects brought by the tenth aspect or the possible implementation, refer to descriptions of the technical effects of the second aspect or a corresponding implementation.

An eleventh aspect of embodiments of this application discloses a communication apparatus, including a communication unit and a processing unit.

The communication unit is configured to receive an address of a core network device from the core network device.

The communication unit is configured to send the address of the core network device to a source secondary node SN.

In a possible implementation, the address of the core network device is carried in a handover command.

In another possible implementation, the address of the core network device is carried in a secondary base station release request message or a secondary base station release confirm message.

For technical effects brought by the eleventh aspect or the possible implementation, refer to descriptions of the technical effects of the third aspect or a corresponding implementation.

A twelfth aspect of embodiments of this application discloses a communication apparatus, including a communication unit and a processing unit.

The communication unit is configured to receive an address of a target SN from a source master node MN or a core network device.

The processing unit is configured to establish, based on the address of the target SN, a channel for data forwarding between the apparatus and the target SN.

In a possible implementation, the address of the target SN includes a general packet radio service tunneling protocol GTP tunnel endpoint identifier.

For technical effects brought by the twelfth aspect or the possible implementation, refer to descriptions of the technical effects of the fourth aspect or a corresponding implementation.

A thirteenth aspect of embodiments of this application discloses a communication apparatus, including a communication unit and a processing unit.

The communication unit is configured to receive an address of a target master node MN from a source MN or a core network device.

The processing unit is configured to establish, based on the address of the target MN, a channel for data forwarding between the apparatus and the target MN.

For technical effects brought by the thirteenth aspect or the possible implementation, refer to descriptions of the technical effects of the fifth aspect or a corresponding implementation.

A fourteenth aspect of embodiments of this application discloses a communication apparatus, including a communication unit and a processing unit.

The communication unit is configured to receive an address of a target SN from a target MN.

The communication unit is configured to send the address of the target secondary node SN to a source SN.

In a possible implementation, the address of the target SN is carried in a handover response message.

In another possible implementation, the address of the target SN is carried in a secondary base station release request message or a secondary base station release confirm message.

For technical effects brought by the fourteenth aspect or the possible implementation, refer to descriptions of the technical effects of the sixth aspect or a corresponding implementation.

A fifteenth aspect of embodiments of this application discloses a communication apparatus, including a communication unit and a processing unit.

The communication unit is configured to receive an address of a target secondary node SN from the target SN.

The communication unit is configured to send the address of the target SN to a source MN.

In a possible implementation, the processing unit is configured to determine, based on a current load status and a capability, to send the address of the target SN to the source MN.

In another possible implementation, the address of the target SN includes a general packet radio service tunneling protocol GTP tunnel endpoint identifier.

For technical effects brought by the fifteenth aspect or the possible implementation, refer to descriptions of the technical effects of the seventh aspect or a corresponding implementation.

A sixteenth aspect of embodiments of this application discloses a chip system. The chip system includes at least one processor and a communication interface, and the at least one processor is configured to execute a computer program or instructions, to implement the method according to any one of the foregoing aspects.

A seventeenth aspect of embodiments of this application discloses a computer-readable storage medium. The computer-readable storage medium stores computer instructions, and when the computer instructions are run on a processor, the method according to any one of the foregoing aspects is implemented.

An eighteenth aspect of embodiments of this application discloses a computer program product. The computer program product includes computer program code, and when the computer program code is run on a computer, the method according to any one of the foregoing aspects is implemented.

A nineteenth aspect of embodiments of this application discloses a communication system, where the system includes:
the apparatus according to the ninth aspect and the apparatus according to the eleventh aspect; or
the apparatus according to the twelfth aspect and the apparatus according to the fourteenth aspect; or
the apparatus according to the thirteenth aspect and the apparatus according to the fourteenth aspect.

A twentieth aspect of embodiments of this application discloses a communication system, where the system includes:
the apparatus according to the tenth aspect; or
the apparatus according to the fifteenth aspect.

### BRIEF DESCRIPTION OF DRAWINGS

The following describes the accompanying drawings used in embodiments of this application.
FIG. 1 is a schematic diagram of a moving scenario of a terminal device according to an embodiment of this application;
FIG. 2 is a schematic diagram of interworking between a network device 1 and a network device 2 according to an embodiment of this application;
FIG. 3 is a schematic diagram of a dual connectivity scenario of a terminal device according to an embodiment of this application;
FIG. 4 is a schematic diagram of a structure of a communication system according to an embodiment of this application;
FIG. 5 is a schematic diagram of a mobile network according to an embodiment of this application;
FIG. 6 is a schematic diagram of no channel between a network device 1 and a network device 2 according to an embodiment of this application;
FIG. 7 is a schematic diagram of a communication method according to an embodiment of this application;
FIG. 8 is a schematic diagram of establishing, depending on a core network, a channel for data forwarding according to an embodiment of this application;
FIG. 9 is a schematic diagram of establishing, depending on a core network, a channel for data forwarding according to an embodiment of this application;
FIG. 10 is a schematic diagram of a communication method according to an embodiment of this application;
FIG. 11 is a schematic diagram of a structure of a communication system according to an embodiment of this application;
FIG. 12 is a schematic diagram of establishing, depending on a core network, a channel for data forwarding according to an embodiment of this application;
FIG. 13 is a schematic diagram of establishing, depending on a core network, a channel for data forwarding according to an embodiment of this application;
FIG. 14 is a schematic diagram of a communication method according to an embodiment of this application;
FIG. 15 is a schematic diagram of a communication method according to an embodiment of this application;
FIG. 16 is a schematic diagram of a communication method according to an embodiment of this application;
FIG. 17 is a schematic diagram of a channel for data forwarding between a source SN and a target SN according to an embodiment of this application;
FIG. 18 is a schematic diagram of a channel for data forwarding between a source SN and a target SN according to an embodiment of this application;
FIG. 19 is a schematic diagram of a communication method according to an embodiment of this application;
FIG. 20 is a schematic diagram of a channel for data forwarding between a source SN and a target MN according to an embodiment of this application;
FIG. 21 is a schematic diagram of a channel for data forwarding between a source SN and a target MN according to an embodiment of this application;
FIG. 22 is a schematic diagram of a structure of a communication apparatus according to an embodiment of this application; and
FIG. 23 is a schematic diagram of a structure of a communication apparatus according to an embodiment of this application.

### DESCRIPTION OF EMBODIMENTS

The following describes embodiments of this application with reference to the accompanying drawings in embodiments of this application.

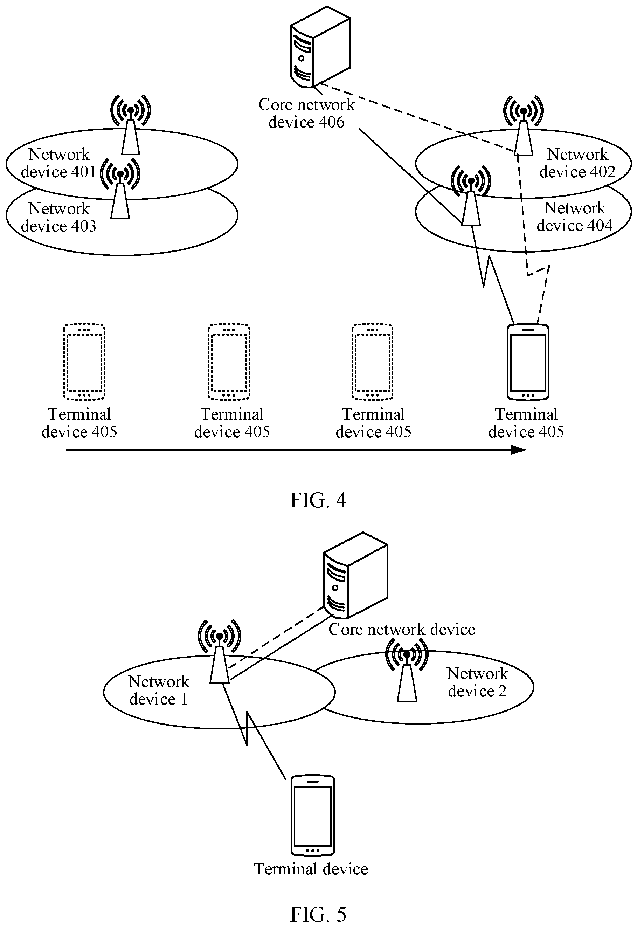

FIG. 4 is a schematic diagram of a structure of a communication system 400 according to an embodiment of this application. The communication system 400 includes a network device 401 to a network device 404, a terminal device 405, and a core network device 406. Before handover of the terminal device 405, the terminal device 405 maintains a radio access function with the network device 401 and the network device 403, and supports the network device 401 and the network device 403 in simultaneously providing wireless links for the terminal device 405, so that data transmission can be simultaneously performed for the terminal device on the two wireless links. After the handover of the terminal device 405, the terminal device 405 maintains a radio access function with the network device 402 and the network device 404, and supports the network device 402 and the network device 404 in simultaneously providing wireless links for the terminal device 405, so that data transmission can be simultaneously performed for the terminal device on the two wireless links. Because the terminal device 405 is handed over from the network device 401 to the network device 402, and a wireless connection is also switched from the network device 401 to the network device 402, the network device 401 may maintain a control signaling connection to the core network device 406, and the network device 401 may be referred to as a source master node (master node, MN). The network device 403 may maintain a user data connection to the core network device 406, and the network device 403 may be referred to as a source secondary node (secondary node, SN). The network device 402 may maintain a control signaling connection to the core network device 406, and the network device 402 may be referred to as a target MN. The network device 404 may maintain a user data connection to the core network device 406, and the network device 404 may be referred to as a target SN. Certainly, FIG. 4 merely shows an example. The communication system may include fewer network devices and fewer core network devices. A method in embodiments of this application may be applied to the communication system 400 shown in FIG. 4.
(1) A terminal device includes a device that provides voice and/or data connectivity for a user, and specifically includes a device that provides voice for a user, or includes a device that provides data connectivity for a user, or includes a device that provides voice and data connectivity for a user. For example, the terminal device may include a handheld device with a wireless connection function, or a processing device connected to a wireless modem. The terminal device may communicate with a core network by using a radio access network (radio access network, RAN), and exchange a voice or data with the RAN, or exchange a voice and data with the RAN. The terminal device may include user equipment (user equipment, UE), a wireless terminal device, a mobile terminal device, a D2D terminal device, and a vehicle to everything (vehicle to everything, V2X) terminal device, a machine-to-machine/machine type communication (machine-to-machine/machine type communication, M2M/MTC) terminal device, an internet of things (internet of things, IoT) terminal device, a light terminal device (light UE), reduced capability user equipment (reduced capability UE, REDCAP UE), a subscriber unit (a subscriber unit), a subscriber station (a subscriber station), a mobile station (mobile station), a remote station (a remote station), an access point (access point, AP), a remote terminal (remote terminal), an access terminal (access terminal), a user terminal (user terminal), a user agent (user agent), a user device (user device), or the like. For example, the terminal device may include a mobile phone (which is also referred to as a "cellular" phone), a computer having a mobile terminal device, a portable, pocket-sized, hand-held, or a computer built-in mobile device. For example, the terminal device may include a personal communication service (personal communication service, PCS) phone, a cordless phone, a session initiation protocol (session initiation protocol, SIP) phone, a wireless local loop (wireless local loop, WLL) station, a personal digital assistant (personal digital assistant, PDA), and other devices. The terminal device further includes a limited device, for example, a device with low power consumption, a device with a limited storage capability, or a device with a limited computing capability. For example, the terminal device includes an information sensing device such as bar code, radio frequency identification (radio frequency identification, RFID), a sensor, a global positioning system (global positioning system, GPS), and a laser scanner.

As an example instead of a limitation, in embodiments of this application, the terminal device may alternatively be a wearable device. The wearable device may also be referred to as a wearable intelligent device, an intelligent wearable device, or the like, and is a general term for a wearable device, such as glasses, gloves, watches, clothing, and shoes, that is intelligently designed for daily wearing by applying a wearable technology. The wearable device is a portable device that is directly worn on the body or integrated into clothes or accessories of a user. The wearable device is not only a hardware device, but also implements powerful functions through software support, data interaction, and cloud interaction. In a broad sense, the wearable intelligent device includes, for example, a smart watch or smart glasses, that have rich functions and a large size, and can implement all or a part of functions without depending on a smartphone, and includes, for example, smart bracelets, smart helmets, and smart jewelry for physical sign monitoring, that focus only on a specific type of application function, and need to be used together with another device such as a smartphone.

The various terminal devices described above may be considered as a vehicle-mounted terminal device if located on a vehicle (for example, placed in a vehicle or mounted in a vehicle), and the vehicle-mounted terminal device is also referred to as, for example, an on-board unit (on-board unit, OBU).

In embodiments of this application, the terminal device may further include a relay (relay) device. Alternatively, it may be understood that all devices that can perform data communication with a base station may be considered as terminal devices.

In embodiments of this application, an apparatus configured to implement a function of a terminal may be the terminal device, or may be an apparatus, for example, a chip system, that can support the terminal device in implementing the function. The apparatus may be installed in the terminal device. In embodiments of this application, the chip system may include a chip, or may include a chip and another discrete component. In the technical solutions provided in embodiments of this application, an example in which an apparatus configured to implement a function of a terminal is a terminal device is used for describing the technical solutions provided in embodiments of this application.

(2) The network device includes, for example, an access network (access network, AN) device, for example, a base station (for example, an access point), and may be a device that communicates with a wireless terminal device over an air interface through one or more cells in an access network, or for example, a network device in a vehicle-to-everything (vehicle-to-everything, V2X) technology is a road side unit (road side unit, RSU). The base station may be configured to perform mutual conversion between a received over-the-air frame and an IP packet, and serve as a router between a terminal device and a remaining part of the access network. The remaining part of the access network may include an IP network. The RSU may be a fixed infrastructure entity supporting a V2X application, and may exchange a message with another entity supporting the V2X application. The network device may further coordinate attribute management of the air interface. For example, the network device may include an evolved base station (NodeB or eNB or e-NodeB, evolved NodeB) in a long term evolution (long term evolution, LTE) system or an advanced long term evolution (long term evolution-advanced, LTE-A) system, or may include a next generation nodeB (next generation nodeB, gNB) in the 5th generation (the 5th generation, 5G) NR system (which is also referred to as an NR system for short), or may include a central unit (central unit, CU) and a distributed unit (distributed unit, DU) in a cloud radio access network (cloud radio access network, Cloud RAN). This is not limited in embodiments of this application.

In embodiments of this application, an apparatus configured to implement a function of the network device may be a network device, or may be an apparatus, for example, a chip system, that can support the network device in implementing the function. The apparatus may be installed in the network device. In the technical solutions provided in embodiments of this application, an example in which an apparatus configured to implement a function of the network device is a network device is used for describing the technical solutions provided in embodiments of this application.

(3) A core network device includes, for example, an access and mobility management function (access and mobility management function, AMF), a session management function (session management function, SMF), a user plane function (user plane function, UPF), or the like. The core network device may include a mobility management device (mobility management entity, MME), a serving gateway (serving gateway, SGW), a packet data node gateway (packet data node gateway, PGW), and a home subscriber server (home subscriber server, HSS) storing user subscription information, a policy controlling unit (Policy and Charging Rule Function, PCRF), or the like, or for example, the core network device may include a gateway switching center (mobile switching center, MSC)/a visitor location register (visitor location register, VLR), a gateway mobile switching center (gateway mobile switching center, GMSC), a serving GPRS support node (serving general packet radio service support node, SGSN), a gateway GPRS support node (gateway general packet radio service support node, GGSN), a home location register (home location register, HLR), and the like, Alternatively, the core network device may be a core network device in a future communication system. This is not limited in embodiments of this application.

In embodiments of this application, an apparatus configured to implement a function of the core network device may be the core network device, or may be an apparatus, for example, a chip system, that can support the core network device in implementing the function. The apparatus may be installed in the core network device. In the technical solutions provided in embodiments of this application, an example in which an apparatus configured to implement the function of the core network device is the core network device is used for describing the technical solutions provided in embodiments of this application.

The foregoing describes some concepts in embodiments of this application, and the following describes technical features of embodiments of this application.
(1) Mobile network: The mobile network may include a terminal device, a network device, and a core network device. A radio access function is completed between the terminal device and the network device, and a wireless link is established between the terminal device and the network device. The terminal device and the core network device may establish, on the established wireless link, various services such as a voice and data that are needed by the user. Specifically, as shown in FIG. 5, dotted-line connection between a network device 1 and the core network device indicates that a control signaling connection is maintained between the network device 1 and the core network device, and a solid-line connection between the network device 1 and the core network device indicates that a user data connection is maintained between the network device 1 and the core network device.
(2) Dual connectivity: A dual connectivity function is introduced to meet an increasingly high requirement for a service rate of a terminal device. Two network devices are supported in simultaneously providing wireless links for one terminal device, so that data transmission can be simultaneously performed for the terminal device on the two wireless links. As shown in FIG. 3, the network device 1 may maintain a control signaling connection to the core network device, and the network device 1 may be referred to as a master node (master node, MN). The network device 2 may maintain a user data connection to the core network device, and the network device 2 may be referred to as a secondary node (secondary node, SN).

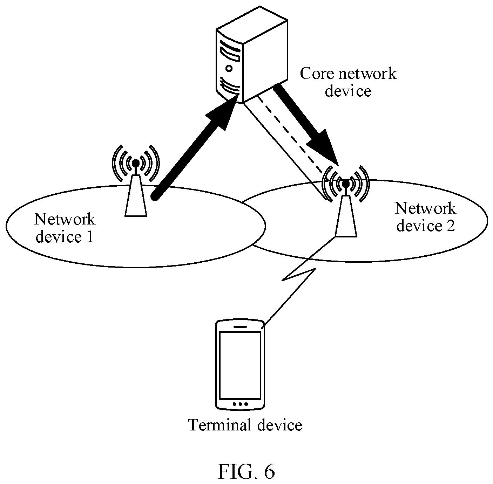

Due to mobility of the terminal device, the terminal device may establish wireless connections to different network devices. The network device needs to ensure service continuity when the terminal device moves between the different network devices. The terminal device may maintain a wireless connection to the network device 1 before handover, and maintain a wireless connection to the network device 2 after the handover. In a process in which the terminal device moves from a coverage area of the network device 1 to a coverage area of the network device 2, or the terminal device is handed over from the network device 1 to the network device 2, the terminal device may still send a part of uplink data and downlink data to the network device 1, or a core network device may still send a part of downlink data of the terminal device to the network device 1. To ensure that the data is not lost in the handover process, the network device 1 needs to send uplink data and downlink data that are of the terminal device and that are received in the handover process to the network device 2, so that the network device 2 continues to process sending and receiving of the uplink data and the downlink data of the terminal device. In this way, service continuity of the terminal device in the handover process is ensured, and user experience is improved. As shown in FIG. 6, when there is no channel directly communicated between the network device 1 and the network device 2, the network device 1 may send the uplink data and the downlink data that are of the terminal device and that are received in the handover process to the network device 2 through an interface between the network device and the core network device.

To ensure that no data is lost in the handover process, a handover source base station forwards, to a target base station that is handed over to, a part of uplink data and downlink data that are of the terminal device and that are sent by the terminal device or the core network device to the source base station in the handover process of the terminal device. The part of the uplink data and the downlink data may be referred to as forwarding data. This process may be referred to as a data forwarding (data forwarding) process. A communication link used for forwarding the part of the uplink data and the downlink data of the terminal device may be referred to as a forwarding channel for short.

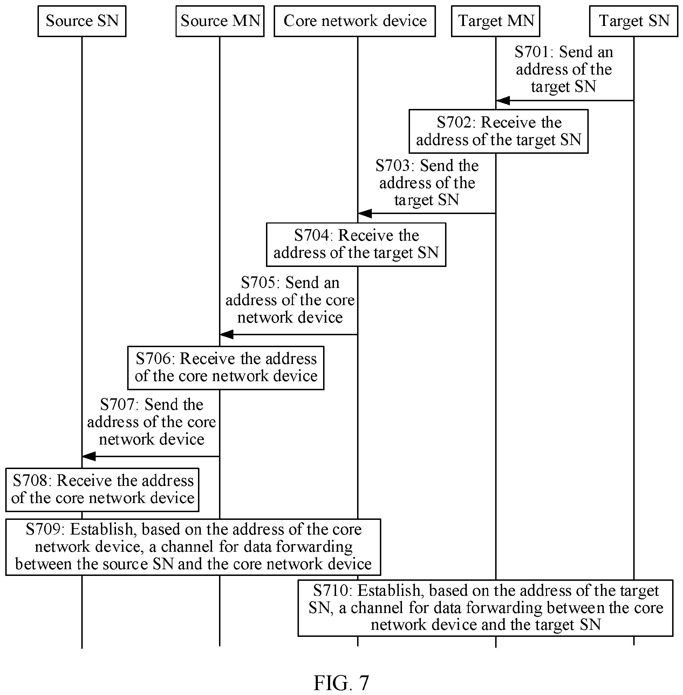

FIG. 7 shows a communication method according to an embodiment of this application. The method shown in FIG. 7 may be applied to the communication system shown in FIG. 4. The method includes but is not limited to the following steps.

Step S701: A target SN sends an address of the target SN to a target MN.

For example, before the target SN sends the address of the target SN to the target MN, a source MN sends a handover request message to the target MN. The handover request message may be sent by the source MN to the target MN via a core network device, or may be sent by the source MN to the target MN without using a core network device. Whether to use a core network device may depend on whether there is an X2/Xn interface between the source SN and the target MN. Correspondingly, the target MN receives the handover request message from the source MN, and then the target MN sends a secondary base station addition request message to the target SN. The secondary base station addition request message is used by the target MN to request to add the target SN. Correspondingly, the target SN receives the secondary base station addition request message from the target MN. After the target SN receives the secondary base station addition request message from the target MN, the target SN may send the address of the target SN to the target MN.

Specifically, the address of the target SN includes a general packet radio service tunneling protocol (general packet radio service tunneling protocol, GTP) tunnel endpoint identifier, and the GTP tunnel endpoint identifier may be a GTP-U (user plane) tunnel endpoint identifier. For example, the GTP-U tunnel endpoint identifier may be a tunnel endpoint identifier (tunnel endpoint identifier, TEID), an internet protocol (internet protocol, IP) address, and a user datagram protocol (user datagram protocol, UDP) port number identifier.

Specifically, the address of the target SN may be carried in a secondary base station addition response message. The secondary base station addition response message indicates that the target SN responds to receiving the secondary base station addition request message from the target MN. The secondary base station addition response message may include that the target SN accepts the secondary base station addition request from the target MN or rejects the secondary base station addition request from the target MN. When the target SN sends the secondary base station addition response message to the target MN, and the secondary base station addition response includes that the target SN rejects the secondary base station addition request from the target MN, the secondary base station addition response message does not carry the address of the target SN. In the method shown in FIG. 7, the secondary base station addition response message indicates that the target SN accepts the secondary base station addition request from the target SN.

Step S702: The target MN receives the address of the target SN from the target SN.

Specifically, the address of the target SN includes the GTP tunnel endpoint identifier, and the address of the target SN may be carried in the secondary base station addition response message.

Step S703: The target MN sends the address of the target SN to the core network device.

Specifically, the address of the target SN may be carried in a handover response message. The handover response message indicates that the target MN responds to receiving the handover request message from the core network device, and the handover response message may include accepting the handover request or rejecting the handover request. When the target MN sends a handover response message to the core network device, and the handover response message includes that the target MN rejects the handover request from the core network device, the handover response message does not carry the address of the target SN. In the method shown in FIG. 7, the handover response message indicates that the target MN accepts the handover request from the core network device.

Step S704: The core network device receives the address of the target SN from the target MN.

Specifically, the address of the target SN may be carried in the handover response message.

Step S705: The core network device sends an address of the core network device to the source MN.

Specifically, the address of the core network device may be carried in a handover command.

Specifically, the core network device may send the address of the core network device to the source MN by including the address of the core network device in an X2-C message. The X2-C message may be a secondary node release request (SGNB RELEASE REQUEST) message or a secondary node release confirm (SGNB RELEASE CONFIRM) message. Specifically, as shown in Table 1, a new field is added to the X2-C message, as shown in the last two rows in Table 1.

**Table 1**

| | | | | |
|---|---|---|---|---|
| Evolved radio access bearer to be released list (E-RABs To Be Released List) | | 0...1 | | |
| >Evolved radio access bearer to be released item (E-RABs To Be Released Item) | | 1.. <maxnoof Bearers | | |
| >>Evolved radio access bearer identifier (E-RAB ID) | M | | 9.2.23 | |
| >>Evolved universal terrestrial radio access and new radio dual connectivity mode resource configuration (EN-DC Resource Configuration) | M | | EN-DC Resource Configuration 9.2.108 | Indicates the packet data convergence protocol and lower layer master cell group/secondary cell group configuration (indicates the PDCP and Lower Layer MCG/SCG configuration) |
| >>Resource configuration (CHOICE Resource Configuration) | M | | | |
| >>>PDCP present in a secondary base station (PDCP present in SN) | | | | Indicates that the PDCP is present at a secondary base station side in an EN-DC networking scenario (This choice tag is used if the PDCP at SgNB IE in the EN-DC Resource Configuration IE is set to the value "present") |
| >>>>Uplink forwarding general packet radio service tunneling protocol tunnel endpoint identifier (UL Forwarding GTP Tunnel Endpoint) | O | | GTP Tunnel Endpoint 9.2.1 | Identifies an X2 interface transport bearer used for forwarding of uplink PDU data (Identifies the X2 transport bearer used for forwarding of UL PDUs) |
| >>>>Downlink forwarding general packet radio service tunneling protocol tunnel endpoint identifier (DL Forwarding GTP Tunnel Endpoint) | O | | GTP Tunnel Endpoint 9.2.1 | Identifies an X2 interface transport bearer used for forwarding of downlink PDU data (Identifies the X2 transport bearer used for forwarding of DL PDUs) |
| >>>>Uplink forwarding general packet radio service tunneling protocol tunnel endpoint identifier (UL Forwarding GTP Tunnel Endpoint) | O | | GTP Tunnel Endpoint 9.2.1 | Identifies an S 1 interface transport bearer used for forwarding of uplink PDU data (Identifies the S 1 transport bearer used for forwarding of UL PDUs) |
| >>>>Downlink forwarding general packet radio service tunneling protocol tunnel endpoint identifier (DL Forwarding GTP Tunnel Endpoint) | O | | GTP Tunnel Endpoint 9.2.1 | Identifies an S 1 interface transport bearer used for forwarding of downlink PDU data (Identifies the S1 transport bearer used for forwarding of DL PDUs) |

Specifically, the core network device may send the address of the core network device to the source MN by including the address of the core network device in an Xn-C message. The Xn-C message may be an S-NODE RELEASE CONFIRM message or an XN-U ADDRESS INDICATION message. For example, a new field is added to the S-NODE RELEASE CONFIRM message, as shown in the last row in Table 2. For another example, a new field is added to the user plane Xn interface address indication (XN-U ADDRESS INDICATION) message, as shown in the last row in Table 3. In Table 3, data forwarding information from a session management function (Data Forwarding Info from SMF) may include uplink forwarding (UL Forwarding) address information and downlink forwarding (DL Forwarding) address information, or data forwarding (Data Forwarding) address information. The UL forwarding address information and forwarding data are used by the target SN to identify data sent by a terminal device to the source SN. The DL forwarding address information and forwarding data are used by the target SN to identify data sent by the core network device to the source SN.

**Table 2**

| IE/Group Name | Presence | Range | IE type and reference |
|---|---|---|---|
| Protocol data unit session list with data forwarding from a target node (PDU Session List with data forwarding from the target node) | | 1.. <maxnoofPD Usessions> | |
| >Protocol data unit session identifier (PDU Session ID) | M | | 9.2.3.18 |
| >Data forwarding information from a target radio access network node (Data Forwarding Info from target NG-RAN node) | M | | 9.2.3.16 |
| >Data forwarding information from a session management function (Data Forwarding Info from SMF) | O | | Data forwarding information from the session management function 9.2.1.16 (Data Forwarding Info from SMF 9.2.1.16) |

**Table 3**

| | | | |
|---|---|---|---|
| Xn-U address information per protocol data unit session resources list (Xn-U Address Information per PDU Session Resources List) | | | |
| >Xn-U address information per protocol data unit session resources item (Xn-U Address Information per PDU Session Resources Item) | | 1.. <maxnoofPDU sessions> | |
| >>Protocol data unit session identifier (PDU Session ID) | M | | 9.2.3.18 |
| >>Data forwarding information from a target radio access network node (Data Forwarding Info from target NG-RAN node) | O | | Data forwarding information from the target radio access network node (Data Forwarding Info from target NG-RAN node) 9.2.1.16 |
| >>Data forwarding information from a session management function (Data Forwarding Info from SMF) | O | | Data forwarding information from the session management function 9.2.1.16 (Data Forwarding Info from SMF 9.2.1.16) |

Step S706: The source MN receives the address of the core network device from the core network device.

For example, after the source MN receives the address of the core network device from the core network device, the source MN sends a handover reconfiguration message to the terminal device. The handover reconfiguration message indicates the terminal device to perform handover from the source MN to the target MN.

Step S707: The source MN sends the address of the core network device to the source SN.

Specifically, the address of the core network device may be carried in a secondary base station release request message or a secondary base station release confirm message.

Step S708: The source SN receives the address of the core network device from the source MN.

Step S709: The source SN establishes, based on the address of the core network device, a channel for data forwarding between the source SN and the core network device.

Specifically, the channel for data forwarding (data forwarding) between the source SN and the core network device is used for transmission of data of the terminal device. The data of the terminal device includes data sent by the terminal device to the core network device, or data sent by the core network device to the terminal device. The data of the terminal device may be data sent by the terminal device to the core network device, or data sent by the core network device to the terminal device before the terminal device is handed over from the source MN to the target MN.

Step S710: The core network device establishes, based on the address of the target SN, a channel for data forwarding between the core network device and the target SN.

Specifically, the address of the target SN is the address of the target SN that is from the target MN and that is received by the core network device in step S704, and the channel data forwarding between the core network device and the target SN is used for transmission of the data of the terminal device. The data of the terminal device includes the data sent by the terminal device to the core network device, or the data sent by the core network device to the terminal device.

Specifically, in a process in which the terminal device is handed over from the source MN to the target MN, the data of the terminal device may be transmitted from the source SN to the target SN through the channel for data forwarding between the source SN and the core network device in step S709 and the channel for data forwarding between the core network device and the target SN.

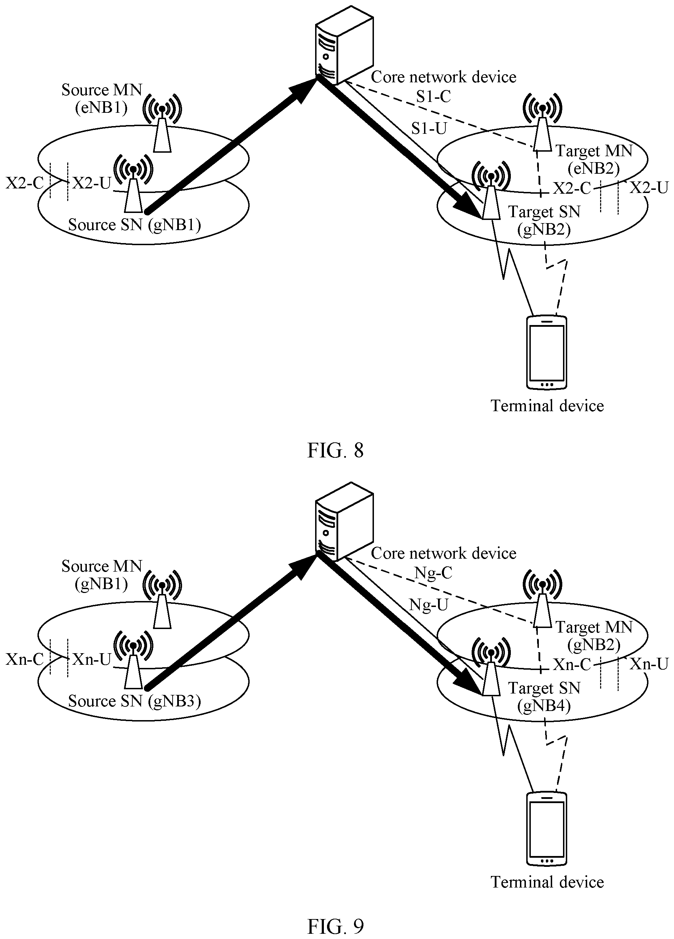

In an example, as shown in FIG. 8, the source MN may be an eNB base station, which is referred to as an eNB 1 for short. The target MN may be an eNB base station, which is referred to as an eNB2 for short. The source SN may be a gNB base station, which is referred to as a gNB 1 for short. The target SN may be a gNB base station, which is referred to as a gNB2 for short. There may or may not be an X2 interface connection between the eNB 1 and the eNB2. There may or may not be an X2 interface connection between the gNB 1 and the gNB2. When there is no X2 interface connection between the eNB 1 and the eNB2, the eNB 1 and the eNB2 need to be connected via the core network device. The eNB 1 and the gNB 1 may be connected through an X2 interface. The X2 interface may be an X2-C interface and an X2-U interface. The X2-C interface represents a control plane interface, and the X2-U interface represents a user plane interface. A connection between the eNB2 and the gNB2 is similar to this. Details are not described herein again. The eNB1 and the core network device are connected through an S1-C interface, and the S1-C interface represents a control plane interface. The gNB1 and the core network device are connected through an S1-U interface, and the S1-U interface represents a user plane interface. The eNB2 and the core network device are connected through an S1-C interface, and the gNB2 and the core network device are connected through an S1-U interface. The channel for data forwarding between the source SN and the core network device may be a channel for data forwarding that is established between the gNB1 and the core network device. The channel for data forwarding between the core network device and the target SN may be a channel for data forwarding that is established between the core network device and the gNB2.

In another example, as shown in FIG. 9, the source MN may be a gNB base station, which is referred to as a gNB1 for short. The target MN may be a gNB base station, which is referred to as a gNB2 for short. The source SN may be a gNB base station, which is referred to as a gNB3 for short. The target SN may be a gNB base station, which is referred to as a gNB4 for short. There may or may not be an Xn interface connection between the gNB1 and the gNB2. When there is no Xn interface connection between the gNB1 and the gNB2, the gNB1 and the gNB2 need to be connected via the core network device. The gNB1 and the gNB3 are connected through an Xn interface. The Xn interface may be an Xn-C interface and an Xn-U interface. The Xn-C interface represents a control plane interface, and the Xn-U interface represents a user plane interface. The core network device and the gNB1 are connected through an Ng-C interface, and the Ng-C interface represents a control plane interface. The core network device and the gNB3 are connected through an Ng-U interface, and the Ng-U interface represents a user plane interface. The connection between the gNB3 and the gNB4 is similar to the connection between the gNB 1 and the gNB2. For a connection between the core network device and the gNB2 and a connection between the core network device and the gNB4, refer to the connection between the core network device and the gNB1 and the connection between the core network device and the gNB3. Details are not described herein again. The channel for data forwarding between the source SN and the core network device may be a channel for data forwarding that is established between the gNB3 and the core network device. The channel for data forwarding between the core network device and the target SN may be a channel for data forwarding that is established between the core network device and the gNB4.

For example, after the core network device establishes, based on the address of the target SN, the channel for data forwarding between the core network device and the target SN, the terminal device sends a handover completion message to the target MN. Correspondingly, the target MN receives the handover completion message from the terminal device. After the target MN receives the handover completion message from the terminal device, it indicates that the terminal device has been handed over from the source MN to the target MN, that is, the handover is completed.

In the method shown in FIG. 7, the source SN establishes, based on the address of the core network device, the channel for data forwarding between the source SN and the core network device, and the core network device establishes, based on the address of the target SN, the channel for data forwarding between the core network device and the target SN, so that the data of the terminal device can be transmitted from the source SN to the target SN through the channel between the source SN and the core network device and the channel between the core network device and the target SN. In a conventional technology, when there is no channel directly communicated between the source MN and the target MN, the source SN communicates with the target MN depending on the core network device, the data of the terminal device needs to be transmitted by the source SN to the target SN via the source MN, the core network device, and the target MN, and forwarding needs to be performed four times. However, in this embodiment of this application, a quantity of times of forwarding is reduced, a delay and overheads are reduced, and user experience is improved.

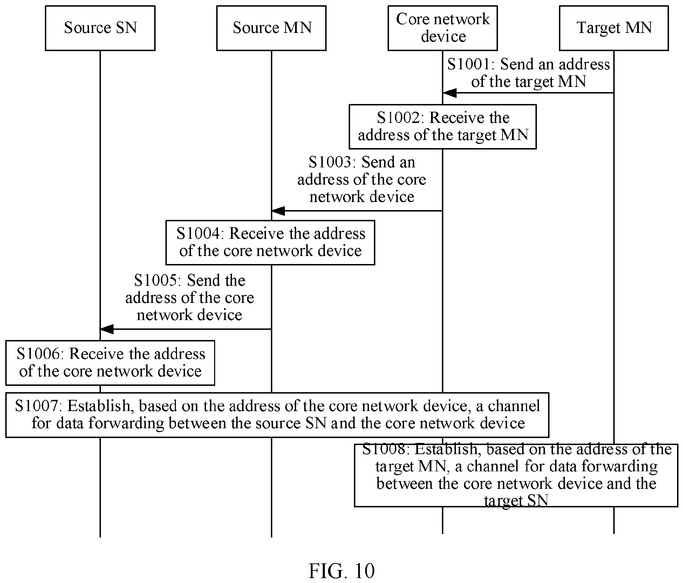

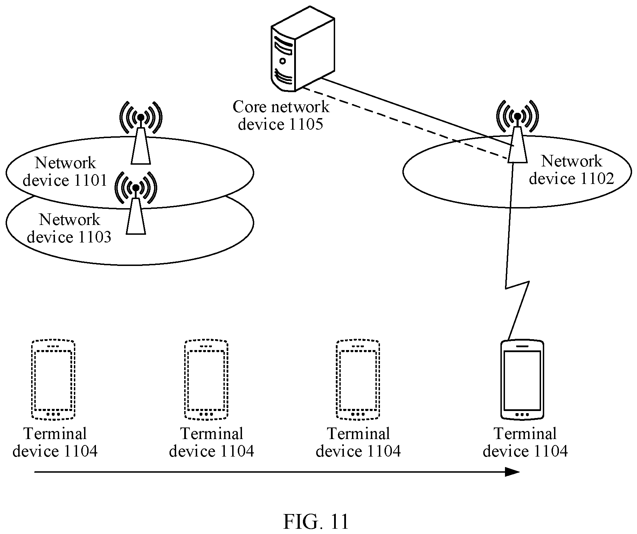

FIG. 10 shows a communication method according to an embodiment of this application. The method shown in FIG. 10 may be applied to the communication system 1100 shown in FIG. 11. The communication system 1100 includes a network device 1101 to a network device 1103, a terminal device 1104, and a core network device 1105. Before handover of the terminal device 1104, the terminal device 1104 maintains a radio access function with the network device 1101 and the network device 1103, supports the network device 1101 and the network device 1103 in simultaneously providing wireless links for the terminal device 1104, so that data transmission can be simultaneously performed for the terminal device on the two wireless links. After the terminal device 1104 is handed over, the terminal device 1104 maintains a radio access function with the network device 1102. Because the terminal device 1104 is handed over from the network device 1101 to the network device 1102, a wireless connection is also switched from the network device 1101 to the network device 1102, the network device 1101 may maintain a control signaling connection to the core network device 1105, and the network device 1101 may be referred to as a source master node (master node, MN). The network device 1103 may maintain a user data connection to the core network device 1105, and the network device 1103 may be referred to as a source secondary node (secondary node, SN). The network device 1102 may maintain a control signaling connection to the core network device 1105, and the network device 1102 may be referred to as a target MN. The method includes but is not limited to the following steps.

Step S1001: The target MN sends an address of the target MN to the core network device.

For example, before the target MN sends the address of the target MN to the core network device, the source MN sends a handover request message to the target MN. The handover request message may be sent by the source MN to the target MN via the core network device, or may be sent by the source MN to the target MN without using the core network device. Whether to use the core network device may depend on whether there is an X2/Xn interface between the source SN and the target MN. In an example, the source MN sends a handover preparation message to the core network device, the core network device receives the handover preparation message from the source MN, the core network device sends a handover request message to the target MN, and correspondingly, the target MN receives the handover request message from the core network device.

Specifically, the address of the target MN may be carried in a handover response message. The handover response message indicates that the target MN responds to receiving the handover request message from the core network device, and the handover response message may include accepting the handover request or rejecting the handover request. When the target MN sends a handover response message to the core network device, and the handover response message includes that the target MN rejects the handover request from the core network device, the handover response message does not carry the address of the target MN. In the method shown in FIG. 10, the handover response message indicates that the target MN accepts the handover request from the core network device.

Step S 1002: The core network device receives the address of the target MN from the target MN.

Specifically, the address of the target MN may be carried in the handover response message.

In an example, when receiving the handover response message, the core network device identifies an address carried in the handover response message. The address carried in the handover response message may be the address of the target MN. Alternatively, in step S704, an address carried in the handover response message is the address of the target SN. In another example, when receiving the handover response message, the core network device does not need to identify an address carried in the handover response message, and the core network device determines that the address carried in the handover response message is an address used for forwarding data of the terminal device.

For step S 1003 to step S1007, refer to step S705 to step S709. Details are not described herein again.

Step S1008: The core network device establishes, based on the address of the target MN, a channel for data forwarding between the core network device and the target MN.

Specifically, the address of the target MN is the address of the target MN that is from the target MN and that is received by the core network device in step S 1002, and the channel for data forwarding between the core network device and the target MN is used for transmission of the data of the terminal device. The data of the terminal device includes data sent by the terminal device to the core network device, or data sent by the core network device to the terminal device.

Specifically, in a process in which the terminal device is handed over from the source MN to the target MN, the data of the terminal device may be transmitted from the source SN to the target MN through the channel for data forwarding between the source SN and the core network device in step S 1007 and the channel for data forwarding between the core network device and the target MN.

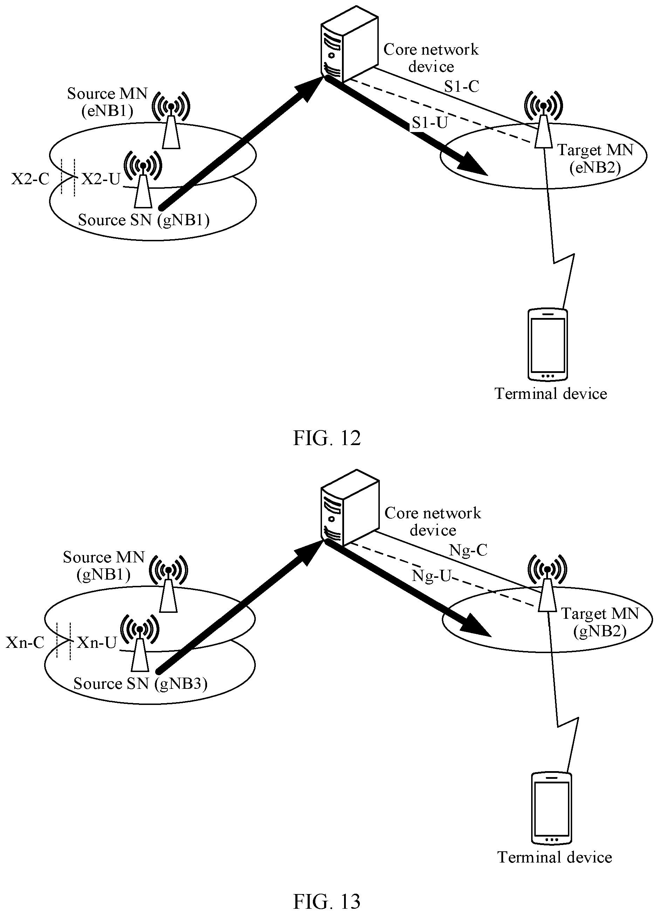

In an example, as shown in FIG. 12, the source MN may be an eNB base station, which is referred to as an eNB 1 for short. The target MN may be an eNB base station, which is referred to as an eNB2 for short. The source SN may be a gNB base station, which is referred to as a gNB 1 for short. There may or may not be an X2 interface connection between the eNB 1 and the eNB2. When there is no X2 interface connection between the eNB 1 and the eNB2, the eNB 1 and the eNB2 need to be connected via the core network device. The eNB 1 and the gNB 1 may be connected through an X2 interface. The X2 interface may be an X2-C interface and an X2-U interface. The X2-C interface represents a control plane interface, and the X2-U interface represents a user plane interface. The eNB 1 and the core network device are connected through an S1-C interface, and the S1-C interface represents a control plane interface. The gNB 1 and the core network device are connected through an S1-U interface, and the S1-U interface represents a user plane interface. The eNB2 and the core network device are connected through an S1-C interface and an S1-U interface. The channel for data forwarding between the source SN and the core network device may be a channel for data forwarding that is established between the gNB 1 and the core network device. The channel for data forwarding between the core network device and the target MN may be a channel for data forwarding that is established between the core network device and the eNB2.

In another example, as shown in FIG. 13, the source MN may be a gNB base station, which is referred to as a gNB 1 for short. The target MN may be a gNB base station, which is referred to as a gNB2 for short. The source SN may be a gNB base station, which is referred to as a gNB3 for short. There may or may not be an Xn interface connection between the gNB 1 and the gNB2. When there is no Xn interface connection between the gNB 1 and the gNB2, the gNB 1 and the gNB2 need to be connected via the core network device. The gNB 1 and the gNB3 are connected through an Xn interface. The Xn interface may be an Xn-C interface and an Xn-U interface. The Xn-C interface represents a control plane interface, and the Xn-U interface represents a user plane interface. The core network device and the gNB1 are connected through an Ng-C interface, and the Ng-C interface represents a control plane interface. The core network device and the gNB3 are connected through an Ng-U interface, and the Ng-U interface represents a user plane interface. The core network device and the gNB2 are connected through an Ng-C interface and an Ng-U interface. The channel for data forwarding between the source SN and the core network device may be a channel for data forwarding that is established between the gNB3 and the core network device. The channel for data forwarding between the core network device and the target MN may be a channel for data forwarding that is established between the core network device and the gNB2.

For example, after the core network device establishes, based on the address of the target MN, the channel for data forwarding between the core network device and the target MN, the terminal device sends a handover completion message to the target MN. Correspondingly, the target MN receives the handover completion message from the terminal device. After the target MN receives the handover completion message from the terminal device, it indicates that the terminal device has been handed over from the source MN to the target MN, that is, the handover is completed.

In the method shown in FIG. 10, in the communication system shown in FIG. 11, the source SN establishes, based on the address of the core network device, the channel for data forwarding between the source SN and the core network device, and the core network device establishes, based on the address of the target MN, the channel for data forwarding between the core network device and the target MN, so that the data of the terminal device can be transmitted from the source SN to the target MN through the channel between the source SN and the core network device and the channel between the core network device and the target MN. In a conventional technology, when there is no channel directly communicated between the source MN and the target MN, the source SN communicates with the target MN depending on the core network device, forwarding data of the terminal device needs to be transmitted by the source SN to the target MN via the source MN and the core network device, and forwarding needs to be performed three times. However, in this embodiment of this application, a quantity of times of forwarding is reduced, a delay and overheads are reduced, and user experience is improved.

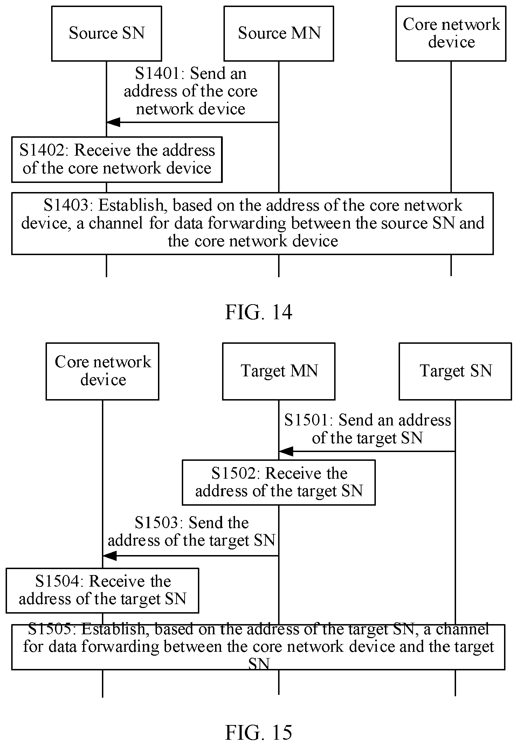

FIG. 14 shows a communication method according to an embodiment of this application. The method includes but is not limited to the following steps.

Step S1401: A source MN sends an address of a core network device to a source SN.

For details, refer to step S707. Details are not described herein again.

Step S1402: The source SN receives the address of the core network device from the source MN.

For details, refer to step S708. Details are not described herein again.

Step S1403: The source SN establishes, based on the address of the core network device, a channel for data forwarding between the source SN and the core network device.

For details, refer to step S709. Details are not described herein again.

FIG. 15 shows a communication method according to an embodiment of this application. The method includes but is not limited to the following steps.

Step S1 501: A target SN sends an address of the target SN to a target MN.

For details, refer to step S701. Details are not described herein again.

Step S1502: The target MN receives the address of the target SN from the target SN.

For details, refer to step S702. Details are not described herein again.

Step S1503: The target MN sends the address of the target SN to the core network device.

For details, refer to step S703. Details are not described herein again.

Step S1504: The core network device receives the address of the target SN from the target MN.

For details, refer to step S704. Details are not described herein again.

Step S1505: The core network device establishes, based on the address of the target SN, a channel for data forwarding between the core network device and the target SN.

For details, refer to step S710. Details are not described herein again.

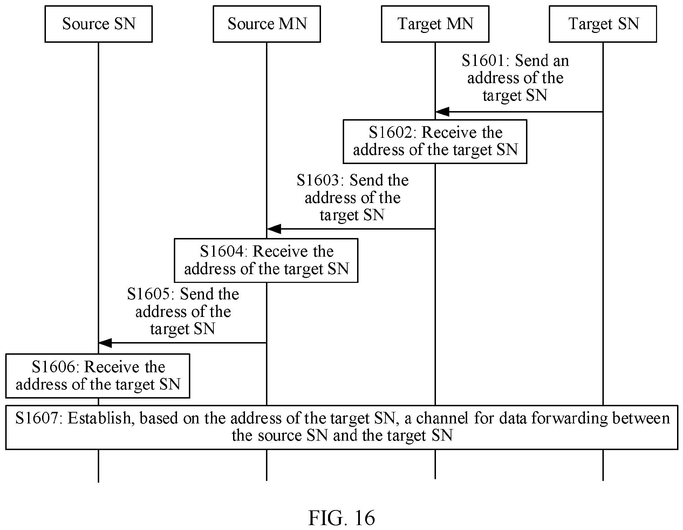

FIG. 16 shows a communication method according to an embodiment of this application. The method shown in FIG. 16 may be applied to the communication system shown in FIG. 4. The method includes but is not limited to the following steps.

Step S1601: A target SN sends an address of the target SN to a target MN.

For example, before the target SN sends the address of the target SN to the target MN, a source MN sends a handover request message to the target MN. Correspondingly, the target MN receives the handover request message from the source MN, and then the target MN sends a secondary base station addition request message to the target SN. The secondary base station addition request message is used by the target MN to request to add the target SN. Correspondingly, the target SN receives the secondary base station addition request message from the target MN.

Specifically, the address of the target SN includes a GTP tunnel endpoint identifier. The GTP tunnel endpoint identifier may be a GTP-U tunnel endpoint identifier. For example, the GTP-U tunnel endpoint identifier may be a TEID, an IP address, and a UDP port number identifier.

Specifically, the target MN may determine, based on a current load status and a capability, to send the address of the target SN to the source MN. The capability may include whether the target MN supports a source SN in establishing, based on the address of the target SN, a channel for data forwarding between the source SN and the target SN. When the target MN supports establishment of the channel for data forwarding between the source SN and the target SN, the address of the target SN is sent to the source MN. When the target MN does not support establishment of the channel for data forwarding between the source SN and the target SN, an address of the target MN is sent to the source MN.

Specifically, the address of the target SN may be carried in a secondary base station addition response message. The secondary base station addition response message indicates that the target SN responds to receiving the secondary base station addition request message from the target MN. The secondary base station addition response message may include that the target SN accepts the secondary base station addition request from the target MN or rejects the secondary base station addition request from the target MN. When the target SN sends the secondary base station addition response message to the target MN, and the secondary base station addition response message includes that the target SN rejects the secondary base station addition request from the target MN, the secondary base station addition response message does not carry the address of the target SN. In the method shown in FIG. 16, the secondary base station addition response message indicates that the target SN accepts the secondary base station addition request from the target SN.

Step S 1602: The target MN receives the address of the target SN from the target SN.

Specifically, the address of the target SN includes the GTP tunnel endpoint identifier, and the address of the target SN may be carried in the secondary base station addition response message.

Step S 1603: The target MN sends the address of the target SN to the source MN.

Specifically, the address of the target SN may be carried in a handover response message. The handover response message indicates that the target MN responds to receiving the handover request message from the source MN. The handover response message may include accepting the handover request or rejecting the handover request. When the target MN sends a handover response message to the source MN, and the handover response message includes that the target MN rejects the handover request from the source MN, the handover response message does not carry the address of the target SN. In the method shown in FIG. 16, the handover response message indicates that the target MN accepts the handover request from the source MN.

Step S 1604: The source MN receives the address of the target SN from the target MN.

For example, after the source MN receives the address of target SN from the target MN, the source MN sends a handover reconfiguration message to a terminal device. The handover reconfiguration message indicates the terminal device to perform handover from the source MN to the target MN.

Step S 1605: The source MN sends the address of the target SN to the source SN.

Specifically, the address of the target SN may be carried in a secondary base station release request message or a secondary base station release confirm message.

Step S 1606: The source SN receives the address of the target SN from the source MN.

Step S1607: The source SN establishes, based on the address of the target SN, a channel for data forwarding between the source SN and the target SN.

Specifically, data may be a part of uplink data and downlink data that are of the terminal device and that are sent by the terminal device to the source SN in a process in which the terminal device is handed over from the source MN to the target MN.

For example, after the source SN establishes, based on the address of the target SN, the channel for data forwarding between the source SN and the target SN, the terminal device sends a handover completion message to the target MN. Correspondingly, the target MN receives the handover completion message from the terminal device. After the target MN receives the handover completion message from the terminal device, it indicates that the terminal device has been handed over from the source MN to the target MN, that is, the handover is completed.

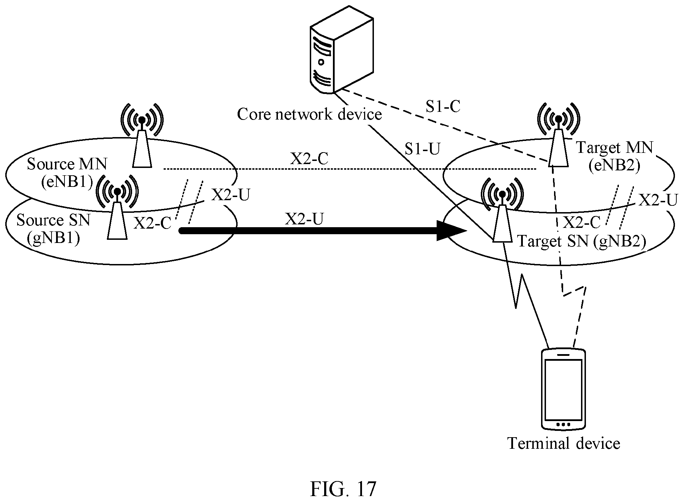

In an example, as shown in FIG. 17, the source MN may be an eNB base station, which is referred to as an eNB1 for short. The target MN may be an eNB base station, which is referred to as an eNB2 for short. The source SN may be a gNB base station, which is referred to as a gNB 1 for short. The target SN may be a gNB base station, which is referred to as a gNB2 for short. The eNB1 and the eNB2 may be connected through an X2-C interface. The eNB1 and the gNB1 may be connected through an X2 interface. The X2 interface may be an X2-C interface and an X2-U interface. The X2-C interface represents a control plane interface, and the X2-U interface represents a user plane interface. A connection between the eNB2 and the gNB2 is similar to this. Details are not described herein again. The eNB1 and the core network device are connected through an S1-C interface. The gNB1 and the core network device are connected through an S1-U interface. The S1-C interface represents a control plane interface, and the S1-U interface represents a user plane interface. The eNB2 and the core network device are connected through an S1-C interface, and the gNB2 and the core network device are connected through an S1-U interface. The channel for data forwarding between the source SN and the target SN may be a channel for data forwarding that is established between the gNB1 and the gNB2.

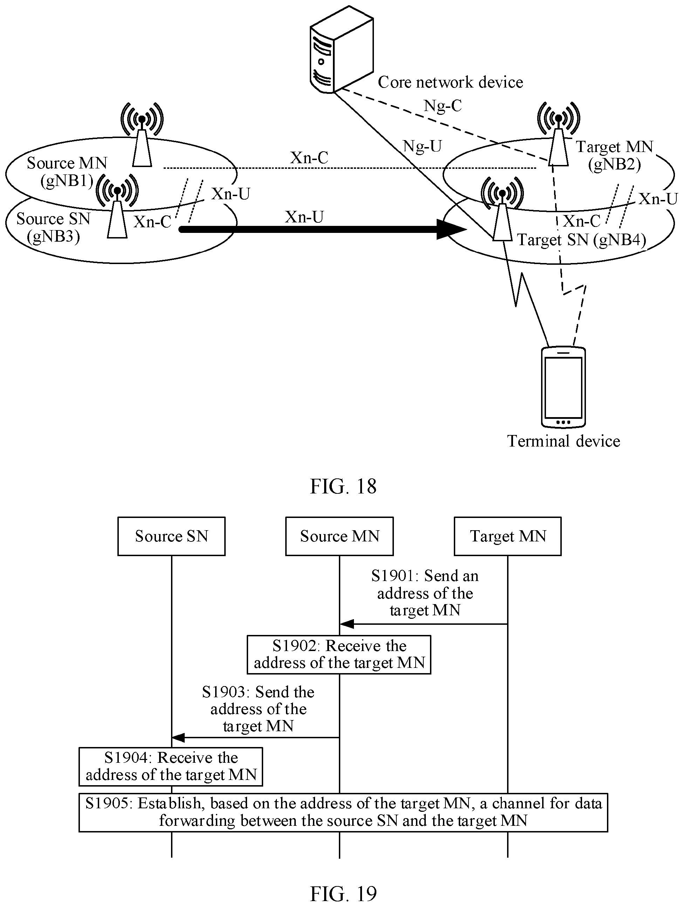

In another example, as shown in FIG. 18, the source MN may be a gNB base station, which is referred to as a gNB1 for short. The target MN may be a gNB base station, which is referred to as a gNB2 for short. The source SN may be a gNB base station, which is referred to as a gNB3 for short. The target SN may be a gNB base station, which is referred to as a gNB4 for short. The gNB1 and the gNB2 are connected through an Xn-C interface. The gNB3 and the gNB4 are connected through an Xn-U interface. The Xn-C interface represents a control plane interface, and the Xn-U interface represents a user plane interface. The gNB1 and the gNB3 may be connected through an Xn interface. The Xn interface may be an Xn-C interface and the Xn-U interface. The Xn-C interface represents a control plane interface, and the Xn-U interface represents a user plane interface. A connection between the gNB2 and the gNB4 is similar to this. Details are not described herein again. The core network device and the gNB1 are connected through an Ng-C interface, and the Ng-C interface represents a control plane interface. The core network device and the gNB3 are connected through an Ng-U interface, and the Ng-U interface represents a user plane interface. The core network device and the gNB2 are connected through an Ng-C interface, the core device and the gNB4 are connected through an Ng-U interface, and the gNB3 and the gNB4 are connected through an Xn-U interface. The channel for data forwarding between the source SN and the target SN may be a channel for data forwarding that is established between the gNB3 and the gNB4. In the method described in FIG. 16, in the communication system shown in FIG. 4, the source SN establishes, based on the address of the target SN, the channel for data forwarding between the source SN and the target SN, so that the data of the terminal device can be transmitted from the source SN to the target SN through the channel between the source SN and the target SN. In a conventional technology, in a scenario in which there is a channel directly communicated between the source MN and the target MN, the data of the terminal device needs to be transmitted from the source SN to the target SN via the source MN and the target MN, and forwarding needs to be performed three times. However, in this embodiment of this application, a quantity of times of forwarding is reduced, a delay and overheads are reduced, and user experience is improved.

FIG. 19 shows a communication method according to an embodiment of this application. The method shown in FIG. 19 may be applied to the communication system shown in FIG. 11. The method includes but is not limited to the following steps.

Step S1901: A target MN sends an address of the target MN to a source MN.

For example, before the target MN sends the address of the target MN to the source MN, the source MN sends a handover request message to the target MN. Correspondingly, the target MN receives the handover request message from the source MN.

Specifically, the address of the target MN may be carried in a handover response message. The handover response message indicates that the target MN responds to receiving the handover request message from the source MN. The handover response message may include accepting the handover request or rejecting the handover request. When the target MN sends a handover response message to the source MN, and the handover response message includes that the target MN rejects the handover request from the source MN, the handover response message does not carry the address of the target MN. In the method shown in FIG. 19, the handover response message indicates that the target MN accepts the handover request from the source MN.

Step S1902: The source MN receives the address of the target MN from the target MN.

For example, after the source MN receives the address of the target MN from the target MN, the source MN sends a handover reconfiguration message to a terminal device. The handover reconfiguration message indicates the terminal device to perform handover from the source MN to the target MN.

Step S 1903: The source MN sends the address of the target MN to a source SN.

Specifically, the address of the target MN may be carried in a secondary base station release request message or a secondary base station release confirm message.

Step S1904: The source SN receives the address of the target MN from the source MN.

Step S1905: The source SN establishes, based on the address of the target MN, a channel for data forwarding between the source SN and the target MN.

Specifically, data may be a part of uplink data and downlink data that are of the terminal device and that are sent by the terminal device to the source SN in a process in which the terminal device is handed over from the source MN to the target MN.

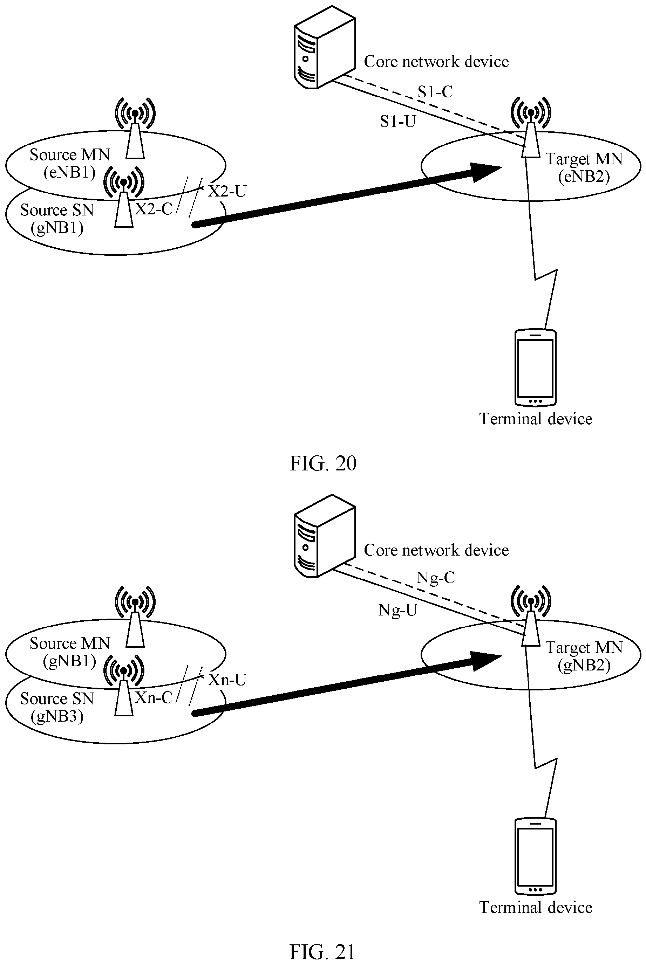

In an example, as shown in FIG. 20, the source MN may be an eNB base station, which is referred to as an eNB1 for short. The target MN may be an eNB base station, which is referred to as an eNB2 for short. The source SN may be a gNB base station, which is referred to as a gNB 1 for short. The eNB1 and the eNB2 may be connected through an X2-C interface, and the X2-C interface represents a control plane interface. The eNB1 and the gNB1 may be connected through an X2 interface. The X2 interface may be an X2-C interface and an X2-U interface. The X2-U interface represents a user plane interface. A core network device and the eNB1 are connected through an S1-C interface, and the core network device and the gNB1 are connected through an S1-U interface. The S1-C interface represents a control plane interface, and the S1-U interface represents a user plane interface. The core network device and the eNB2 are connected through the S1-C interface and the S1-U interface. The channel for data forwarding between the source SN and the target MN may be a channel for data forwarding that is established between the gNB1 and the eNB2.

In another example, as shown in FIG. 21, the source MN may be a gNB base station, which is referred to as a gNB1 for short. The target MN may be a gNB base station, which is referred to as a gNB2 for short. The source SN may be a gNB base station, which is referred to as a gNB3 for short. The gNB1 and the gNB2 may be connected through an Xn-C interface, and the Xn-C interface represents a control plane interface. The gNB1 and the gNB3 are connected through an Xn-C interface and an Xn-U interface. The Xn-C interface represents a control plane interface, and the Xn-U interface represents a user plane interface. A core network device and the gNB1 are connected through an Ng-C interface, and the Ng-C interface represents a control plane interface. The core network device and the gNB3 are connected through an Ng-U interface, and the Ng-U interface represents a user plane interface. The channel for data forwarding between the source SN and the target MN may be a channel for data forwarding that is established between the gNB3 and the gNB2.

In the method described in FIG. 19, in the communication system shown in FIG. 11, the source SN establishes, based on the address of the target MN, the channel for data forwarding between the source SN and the target MN, so that the data of the terminal device can be transmitted from the source SN to the target MN through the channel between the source SN and the target MN. In a conventional technology, in a scenario in which there is a channel directly communicated between the source MN and the target MN, the data of the terminal device needs to be transmitted from the source SN to the target MN via the source MN, and forwarding needs to be performed twice. However, in this embodiment of this application, a quantity of times of forwarding is reduced, a delay and overheads are reduced, and user experience is improved.

The foregoing describes in detail the method in embodiments of this application, and the following provides an apparatus in embodiments of this application.

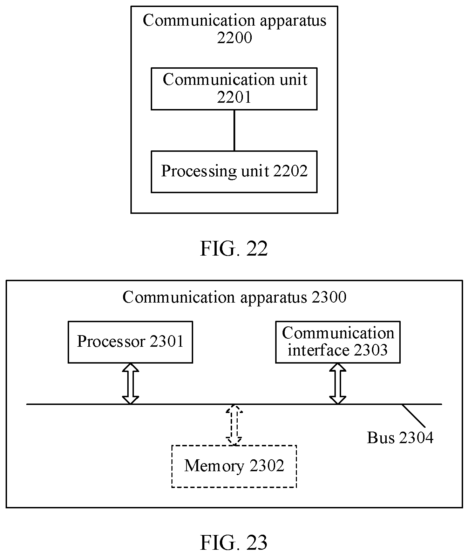

FIG. 22 is a schematic diagram of a structure of a communication apparatus 2200 according to an embodiment of this application. The communication apparatus may include a communication unit 2201 and a processing unit 2202. Detailed descriptions of the units are as follows.

The communication unit 2201 is configured to receive an address of a core network device from a source master node MN.

The processing unit 2202 is configured to establish, based on the address of the core network device, a channel for data forwarding between the apparatus and the core network device, where the channel for data forwarding is used for transmission of data of a terminal device.

In a possible implementation, the data of the terminal device includes data sent by the terminal device to the core network device, or data sent by the core network device to the terminal device.

In another possible implementation, the address of the core network device is carried in a secondary base station release request message or a secondary base station release confirm message.

It should be noted that for implementation and beneficial effects of each unit, refer to corresponding descriptions of the method embodiments shown in FIG. 7, FIG. 10, or FIG. 14.

Optionally, detailed descriptions of the units in the communication apparatus 2200 may further be as follows.

The communication unit 2201 is configured to receive an address of a target secondary node SN from the target SN.

The communication unit 2201 is configured to send the address of the target SN to the core network device.

In a possible implementation, the address of the target SN is carried in a secondary base station addition response message.

In another possible implementation, the address of the target SN is carried in a handover response message.

In another possible implementation, the address of the target SN includes a general packet radio service tunneling protocol GTP tunnel endpoint identifier.

It should be noted that for implementation and beneficial effects of each unit, refer to corresponding descriptions of the method embodiments shown in FIG. 7.

Optionally, detailed descriptions of the units in the communication apparatus 2200 may further be as follows.

The communication unit 2201 is configured to receive an address of the core network device from the core network device.

The communication unit 2201 is configured to send the address of the core network device to a source secondary node SN.

In a possible implementation, the address of the core network device is carried in a handover command.

In another possible implementation, the address of the core network device is carried in a secondary base station release request message or a secondary base station release confirm message.

It should be noted that for implementation and beneficial effects of each unit, refer to corresponding descriptions of the method embodiments shown in FIG. 7, FIG. 10, or FIG. 14.

Optionally, detailed descriptions of the units in the communication apparatus 2200 may further be as follows.

The communication unit 2201 is configured to receive an address of a target SN from a source master node MN or a core network device.

The processing unit 2202 is configured to establish, based on the address of the target SN, a channel for data forwarding between the apparatus and the target SN.

In a possible implementation, the address of the target SN includes a general packet radio service tunneling protocol GTP tunnel endpoint identifier.

It should be noted that for implementation and beneficial effects of each unit, refer to corresponding descriptions of the method embodiments shown in FIG. 16.

Optionally, detailed descriptions of the units in the communication apparatus 2200 may further be as follows.

The communication unit 2201 is configured to receive an address of a target MN from a source master MN or a core network device.

The processing unit 2202 is configured to establish, based on the address of the target MN, a channel for data forwarding between the apparatus and the target MN.

It should be noted that for implementation and beneficial effects of each unit, refer to corresponding descriptions of the method embodiments shown in FIG. 19.

Optionally, detailed descriptions of the units in the communication apparatus 2200 may further be as follows.

The communication unit 2201 is configured to receive an address of a target SN from a target MN.

The communication unit 2201 is configured to send the address of the target secondary node SN to a source SN.

In a possible implementation, the address of the target SN is carried in a handover response message.

In another possible implementation, the address of the target SN is carried in a secondary base station release request message or a secondary base station release confirm message.

It should be noted that for implementation and beneficial effects of each unit, refer to corresponding descriptions of the method embodiments shown in FIG. 16.

Optionally, detailed descriptions of the units in the communication apparatus 2200 may further be as follows.

The communication unit 2201 is configured to receive an address of a target secondary node SN from the target SN.

The communication unit 2201 is configured to send an address of a target SN to a source MN.

In a possible implementation, the processing unit 2202 is configured to determine, based on a current load status and a capability, to send the address of the target SN to the source MN.

In another possible implementation, the address of the target SN includes a general packet radio service tunneling protocol GTP tunnel endpoint identifier.

It should be noted that for implementation and beneficial effects of each unit, refer to corresponding descriptions of the method embodiments shown in FIG. 16.

FIG. 23 shows a communication apparatus 2300 according to an embodiment of this application. The apparatus 2300 includes at least one processor 2301 and a communication interface 2303, and optionally, further includes a memory 2302. The processor 2301, the memory 2302, and the communication interface 2303 are connected to each other through a bus 2304.

The memory 2302 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 2302 is used for a related computer program and data. The communication interface 2303 is configured to receive and send data.

The processor 2301 may be one or more central processing units (central processing units, CPUs). When the processor 2301 is one CPU, the CPU may be a single-core CPU, or may be a multi-core CPU.

The processor 2301 in the apparatus 2300 is configured to read computer program code stored in the memory 2302, and perform the following operations:
receiving an address of a core network device from a source master node MN by using the communication interface 2303; and
establishing, based on the address of the core network device, a channel for data forwarding between the apparatus and the core network device, where the channel for data forwarding is used for transmission of data of a terminal device.

In a possible implementation, the data of the terminal device includes data sent by the terminal device to the core network device, or data sent by the core network device to the terminal device.

In another possible implementation, the address of the core network device is carried in a secondary base station release request message or a secondary base station release confirm message.

It should be noted that for implementation and beneficial effects of each operation, refer to corresponding descriptions of the method embodiments shown in FIG. 7, FIG. 10, or FIG. 14.

The processor 2301 in the apparatus 2300 may be further configured to read the computer program code stored in the memory 2302, and perform the following operations:
receiving the address of the target SN from the target secondary node SN through the communication interface 2303; and
sending the address of the target SN to the core network device through the communication interface 2303.

In a possible implementation, the address of the target SN is carried in a secondary base station addition response message.

In another possible implementation, the address of the target SN is carried in a handover response message.

In another possible implementation, the address of the target SN includes a general packet radio service tunneling protocol GTP tunnel endpoint identifier.

It should be noted that for implementation and beneficial effects of each operation, refer to corresponding descriptions of the method embodiments shown in FIG. 7.

The processor 2301 in the apparatus 2300 may be further configured to read the computer program code stored in the memory 2302, and perform the following operations:
receiving an address of the core network device from the core network device through the communication interface 2303; and
sending the address of the core network device to the source secondary node SN through the communication interface 2303.

In a possible implementation, the address of the core network device is carried in a handover command.

In another possible implementation, the address of the core network device is carried in a secondary base station release request message or a secondary base station release confirm message.

It should be noted that for implementation and beneficial effects of each operation, refer to corresponding descriptions of the method embodiments shown in FIG. 7, FIG. 10, or FIG. 14.

The processor 2301 in the apparatus 2300 may be further configured to read the computer program code stored in the memory 2302, and perform the following operations:
receiving an address of a target SN from a source master MN or a core network device through the communication interface 2303; and
establishing, based on the address of the target SN, the channel for data forwarding between the apparatus and the target SN.

In a possible implementation, the address of the target SN includes a general packet radio service tunneling protocol GTP tunnel endpoint identifier.

It should be noted that for implementation and beneficial effects of each operation, refer to corresponding descriptions of the method embodiments shown in FIG. 16.

The processor 2301 in the apparatus 2300 may be further configured to read the computer program code stored in the memory 2302, and perform the following operations:
receiving an address of a target MN from a source master MN or a core network device through the communication interface 2303; and
establishing, based on the address of the target MN, the channel for data forwarding between the apparatus and the target MN.

It should be noted that for implementation and beneficial effects of each operation, refer to corresponding descriptions of the method embodiments shown in FIG. 19.

The processor 2301 in the apparatus 2300 may be further configured to read the computer program code stored in the memory 2302, and perform the following operations:
receiving an address of the target SN from the target MN through the communication interface 2303; and
sending the address of the target SN to the source secondary node SN through the communication interface 2303.

In a possible implementation, the address of the target SN is carried in a handover response message.

In another possible implementation, the address of the target SN is carried in a secondary base station release request message or a secondary base station release confirm message.

It should be noted that for implementation and beneficial effects of each operation, refer to corresponding descriptions of the method embodiments shown in FIG. 16.

The processor 2301 in the apparatus 2300 may be further configured to read the computer program code stored in the memory 2302, and perform the following operations:
receiving the address of the target SN from the target secondary node SN through the communication interface 2303; and
sending the address of the target SN to the source MN through the communication interface 2303.

In a possible implementation, the processor 2301 is configured to determine, based on a current load status and a capability, to send the address of the target SN to the source MN.

In another possible implementation, the address of the target SN includes a general packet radio service tunneling protocol GTP tunnel endpoint identifier.

It should be noted that for implementation and beneficial effects of each operation, refer to corresponding descriptions of the method embodiments shown in FIG. 16.

It can be understood that the processor in embodiments of this application may be a central processing unit (Central Processing Unit, CPU), or may be another general purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor.

The method steps in embodiments of this application may be implemented by hardware, or may be implemented by a processor executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. An example of a storage medium is coupled to the processor, so that the processor can read information from the storage medium and can write information to the storage medium. Certainly, the storage medium may alternatively be a component of the processor. The processor and the storage medium may be located in the ASIC. In addition, the ASIC may be located in a base station or a terminal. Certainly, the processor and the storage medium may exist in the base station or the terminal as discrete components.

All or a part of the foregoing embodiments may be implemented through software, hardware, firmware, or any combination thereof. When software is used for implementation, all or a part of the implementation may be implemented in a form of a computer program product. The computer program product includes one or more computer programs or instructions. When the computer programs or instructions are loaded and executed on a computer, the procedures or functions according to embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from one computer-readable storage medium to another computer-readable storage medium. For example, the computer program or instructions may be transmitted from a website, a computer, a server, or a data center in a wired or wireless manner to another website, computer, server, or data center. The computer-readable storage medium may be any usable medium accessible to the computer, or a data storage device, such as a server or a data center, that integrates one or more usable media. The usable medium may be a magnetic medium, for example, a floppy disk, a hard disk, or a magnetic tape; or may be an optical medium, for example, a digital video disc; or may be a semiconductor medium, for example, a solid state drive. The computer-readable storage medium may be a volatile storage medium or a nonvolatile storage medium, or may include a volatile memory and a nonvolatile memory.

In embodiments of this application, unless otherwise specified or logically conflicted, terms and/or descriptions in different embodiments are consistent and may be mutually referenced, and technical features in different embodiments may be combined to form a new embodiment based on internal logical relationships of different embodiments.

It may be understood that numerical symbols involved in embodiments of this application are differentiated merely for ease of description, but are not intended to limit the scope of embodiments of this application. Sequence numbers of the foregoing processes do not mean execution sequences. The execution sequences of the processes should be determined based on functions and internal logic of the processes.

## Claims

1. A communication method, comprising:
receiving, by a source secondary node SN, an address of a core network device from a source master node MN; and
establishing, by the source SN based on the address of the core network device, a channel for data forwarding between the source SN and the core network device, wherein the channel for data forwarding is used for transmission of data of a terminal device.

2. The method according to claim 1, wherein
the data of the terminal device comprises data sent by the terminal device to the core network device, or data sent by the core network device to the terminal device.

3. The method according to claim 1 or 2, wherein
the address of the core network device is carried in a secondary base station release request message or a secondary base station release confirm message.

4. A communication method, comprising:
receiving, by a target master node MN, an address of a target secondary node SN from the target SN; and
sending, by the target MN, the address of the target SN to a core network device.

5. The method according to claim 4, wherein the address of the target SN is carried in a secondary base station addition response message.

6. The method according to claim 4 or 5, wherein the address of the target SN is carried in a handover response message.

7. The method according to any one of claims 4 to 6, wherein the address of the target SN comprises a general packet radio service tunneling protocol GTP tunnel endpoint identifier.

8. A communication method, comprising:
receiving, by a source master node MN, an address of a core network device from the core network device; and
sending, by the source MN, the address of the core network device to a source secondary node SN.

9. The method according to claim 8, wherein
the address of the core network device is carried in a handover command.

10. The method according to claim 8 or 9, wherein
the address of the core network device is carried in a secondary base station release request message or a secondary base station release confirm message.

11. A communication method, comprising:
receiving, by a source secondary node SN, an address of a target SN from a source master node MN or a core network device; and
establishing, by the source SN based on the address of the target SN, a channel for data forwarding between the source SN and the target SN.

12. The method according to claim 11, wherein the address of the target SN comprises a general packet radio service tunneling protocol GTP tunnel endpoint identifier.

13. A communication method, comprising:
receiving, by a source secondary node SN, an address of a target master node MN from a source MN or a core network device; and
establishing, by the source SN based on the address of the target MN, a channel for data forwarding between the source SN and the target MN.

14. A communication method, comprising:
receiving, by a source master node MN, an address of a target SN from a target MN; and
sending, by the source MN, the address of the target secondary node SN to a source SN.

15. The method according to claim 14, wherein the address of the target SN is carried in a handover response message.

16. The method according to claim 14 or 15, wherein the address of the target SN is carried in a secondary base station release request message or a secondary base station release confirm message.

17. A communication method, comprising:
receiving, by a target master node MN, an address of a target secondary node SN from the target SN; and
sending, by the target MN, the address of the target SN to a source MN.

18. The method according to claim 17, wherein the sending, by the target MN, the address of the target SN to a source MN comprises:
determining, by the target MN based on a current load status and a capability, to send the address of the target SN to the source MN.

19. The method according to claim 17 or 18, wherein the address of the target SN comprises a general packet radio service tunneling protocol GTP tunnel endpoint identifier.

20. A communication apparatus, comprising a communication unit and a processing unit,
wherein
the communication unit is configured to receive an address of a core network device from a source master node MN; and
the processing unit is configured to establish, based on the address of the core network device, a channel for data forwarding between the apparatus and the core network device, wherein the channel for data forwarding is used for transmission of data of a terminal device.

21. The apparatus according to claim 20, wherein
the data of the terminal device comprises data sent by the terminal device to the core network device, or data sent by the core network device to the terminal device.

22. The apparatus according to claim 20 or 21, wherein the address of the core network device is carried in a secondary base station release request message or a secondary base station release confirm message.

23. A communication apparatus, comprising a communication unit and a processing unit,
wherein
the communication unit is configured to receive an address of a target secondary node SN from the target SN; and
the communication unit is configured to send the address of the target SN to a core network device.

24. The apparatus according to claim 23, wherein the address of the target SN is carried in a secondary base station addition response message.

25. The apparatus according to claim 23 or 24, wherein the address of the target SN is carried in a handover response message.

26. The apparatus according to any one of claims 23 to 25, wherein the address of the target SN comprises a general packet radio service tunneling protocol GTP tunnel endpoint identifier.

27. A communication apparatus, comprising a communication unit and a processing unit,
wherein
the communication unit is configured to receive an address of a core network device from the core network device; and
the communication unit is configured to send the address of the core network device to a source secondary node SN.

28. The apparatus according to claim 27, wherein the address of the core network device is carried in a handover command.

29. The apparatus according to claim 27 or 28, wherein the address of the core network device is carried in a secondary base station release request message or a secondary base station release confirm message.

30. A communication apparatus, comprising a communication unit and a processing unit,
wherein
the communication unit is configured to receive an address of a target SN from a source master node MN or a core network device; and
the processing unit is configured to establish, based on the address of the target SN, a channel for data forwarding between the apparatus and the target SN.

31. The apparatus according to claim 30, wherein the address of the target SN comprises a general packet radio service tunneling protocol GTP tunnel endpoint identifier.

32. A communication apparatus, comprising a communication unit and a processing unit,
wherein
the communication unit is configured to receive an address of a target master node MN from a source MN or a core network device; and
the processing unit is configured to establish, based on the address of the target MN, a channel for data forwarding between the apparatus and the target MN.

33. A communication apparatus, comprising a communication unit and a processing unit,
wherein
the communication unit is configured to receive an address of a target SN from a target MN; and
the communication unit is configured to send the address of the target secondary node SN to a source SN.

34. The apparatus according to claim 33, wherein the address of the target SN is carried in a handover response message.

35. The apparatus according to claim 33 or 34, wherein the address of the target SN is carried in a secondary base station release request message or a secondary base station release confirm message.

36. A communication apparatus, comprising a communication unit and a processing unit,
wherein
the communication unit is configured to receive an address of a target secondary node SN from the target SN; and
the communication unit is configured to send the address of the target SN to a source MN.

37. The apparatus according to claim 36, wherein the processing unit is configured to determine, based on a current load status and a capability, to send the address of the target SN to the source MN.

38. The apparatus according to claim 36 or 37, wherein the address of the target SN comprises a general packet radio service tunneling protocol GTP tunnel endpoint identifier.

39. A communication system, comprising a source master node MN and a source secondary node SN, wherein
the source MN is configured to receive an address of a core network device from the core network device, and send the address of the core network device to the source SN; and
the source SN is configured to receive the address of the core network device from the source MN, and establish, based on the address of the core network device, a channel for data forwarding between the source SN and the core network device, wherein the channel for data forwarding is used for transmission of data of a terminal device.

40. A communication system, comprising a source master node MN and a source secondary node SN, wherein
the source MN is configured to receive an address of a target SN from a target MN, and send the address of the target SN to the source SN; and
the source SN is configured to receive the address of the target SN from the source MN or a core network device, and establish, based on the address of the target SN, a channel for data forwarding between the source SN and the target SN.

41. A communication apparatus, wherein the apparatus comprises at least one processor and a communication interface, and the at least one processor invokes a computer program or instructions stored in a memory to execute the source secondary node SN according to claims 1 to 3.

42. A communication apparatus, wherein the apparatus comprises at least one processor and a communication interface, and the at least one processor invokes a computer program or instructions stored in a memory to execute the target master node MN according to claims 4 to 7.

43. A communication apparatus, wherein the apparatus comprises at least one processor and a communication interface, and the at least one processor invokes a computer program or instructions stored in a memory to execute the source master node MN according to claims 8 to 10.

44. A communication apparatus, wherein the apparatus comprises at least one processor and a communication interface, and the at least one processor invokes a computer program or instructions stored in a memory to execute the source secondary node SN according to claims 11 and 12.

45. A communication apparatus, wherein the apparatus comprises at least one processor and a communication interface, and the at least one processor invokes a computer program or instructions stored in a memory to execute the source secondary node SN according to claim 13.

46. A communication apparatus, wherein the apparatus comprises at least one processor and a communication interface, and the at least one processor invokes a computer program or instructions stored in a memory to execute the source master node MN according to any one of claims 14 to 16.

47. A communication apparatus, wherein the apparatus comprises at least one processor and a communication interface, and the at least one processor invokes a computer program or instructions stored in a memory to execute the target master node MN according to claims 17 to 19.

48. A computer-readable storage medium, wherein the computer-readable storage medium stores instructions, and when the instructions are run on a processor, the method according to any one of claims 1 to 19 is implemented.

49. A computer program product, wherein the computer program product comprises a computer program or instructions, and when the computer program or the instructions are run on a computer, the method according to any one of claims 1 to 19 is implemented.

50. A communication system, comprising:
the source secondary node SN according to claims 1 to 3 and the source master node MN according to claims 8 to 10; or
the source secondary node SN according to claims 11 to 12 and the source primary node MN according to claims 14 to 16.
